# EUROPÄISCHE PATENTANMELDUNG

(11) **EP 0 569 978 A2**
(43) Veröffentlichungstag der Anmeldung: **18.11.1993**
(21) Anmeldenummer: 93107796.0
(22) Anmeldetag: 13.05.1993
(51) Int. Cl.: B65D 6/24

(54) **Wiederverwendbarer Behälter insbesondere für Transport- und Lagerzwecke zum Schutz von (Industrie-)Gütern**

(30) Priorität: 15.05.1992 DE 4216081
(71) Anmelder: Eichmüller, Hartmut, Dr., W-8110 Riegsee (DE)
(72) Erfinder: Eichmüller, Hartmut, Dr., W-8110 Riegsee (DE)

(57) **Zusammenfassung**

Bei der Erfindung handelt es sich um einen mehrfach einsetzbaren Behälter zum Transport und Schutz von Industriegütern, der durch das verwendete Stecksystem auch von einer Person aufgebaut werden kann. Die zerlegbare Konstruktion zeichnet sich besonders durch seine hohe mechanische Festigkeit gegen Kanten- und Eckbelastungen aus und ist ohne Werkzeug aufzubauen.

## Beschreibung

Bei wiederverwendbaren Behältern für Industriegüter üblicher Bauart werden die Seiten- Boden- und Deckelemente miteinander verschraubt. Zur Verschraubung werden Schrauben mit Holzgewinde oder Beschläge mit metrischen Gewindebolzen o.ä. verwendet. Werden die Behälter geöffnet oder verschlossen, so sind sehr viele zeitaufwendige Schraubvorgänge (min. 16 Schrauben pro Behälter durchzuführen. Der Öffnungsvorgang dauert bei einem solchen Behälter erfahrungsgemäß 20 bis 30 Minuten, je nach Anzahl der Schrauben. Außerdem wird zur Durchführung der Arbeiten immer ein passendes Werkzeug benötigt. An Behältern, die mit Holzschrauben verschlossen sind, greifen nach drei bis viermaliger Verwendung die Schrauben in den Löchern nicht mehr und es müssen neue Löcher gebohrt werden. Zerlegbare Behälter sind oft instabil bei Belastung und oft nicht durch eine Person aufzubauen.

Bekannt ist einen wiederverwendbarer Behälter, der die Seiten mit einer Nut- und Federverzahung, bzw. einer Riegelverzahnung an den Boden- und Deckelseiten, und Halteklammern zum Zusammenhalt der Seitenteile mit Boden und Deckel verwendet.

Die Aufgabe der vorliegenden Erfindung ist es, der bisher bekannten Behälterkonstruktion durch eine mechanische Stabilisierung der Seitenwände miteinander eine höhere Festigkeit, insbesondere gegen Kräfte, die auf die Kanten oder Ecken einwirken, zu geben. Weiter war die Erleichterung des Zusammenbaus, auch größerer Behälter durch eine Person gefordert. Dazu musste gewährleistet sein, daß auch schwere Seitenwände ohne Hilfsmittel stehen bleiben ohne Befestigungselemente auf dem Boden zu stark zu belasten.

Die Aufgabe wird einerseits durch zusätzliche Nut- und Federverriegelungen an den senkrechten Kanten des Behälters, andererseits durch zusteckbare Eckstücke erreicht, wobei jeweils eine der Komponenten die Sicherung in einer der zueinander senkrecht stehenden Ebenen übernimmt. Durch eine Verbesserung der Profilquerschnitte in Verbindung mit der mechanischen Aufgabe der Eckstücke wird die geforderte problemlose, weil klemmfreie Montage erreicht.

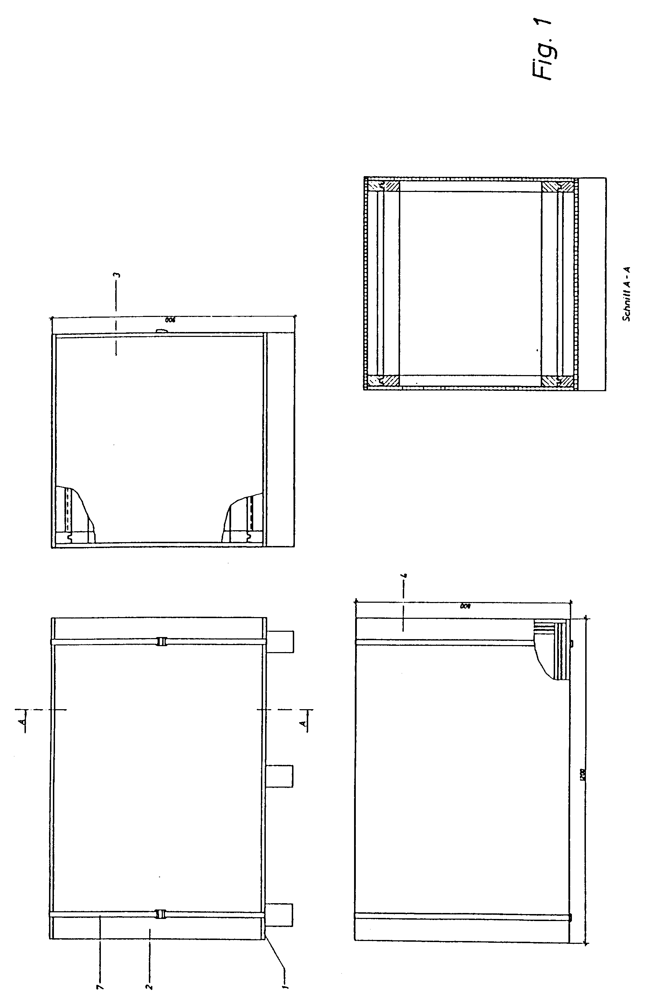

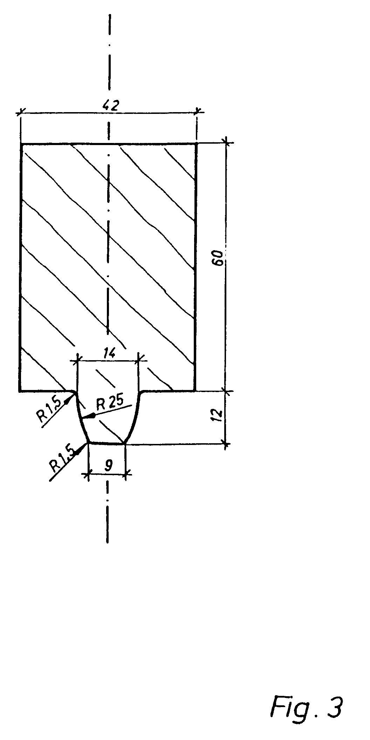

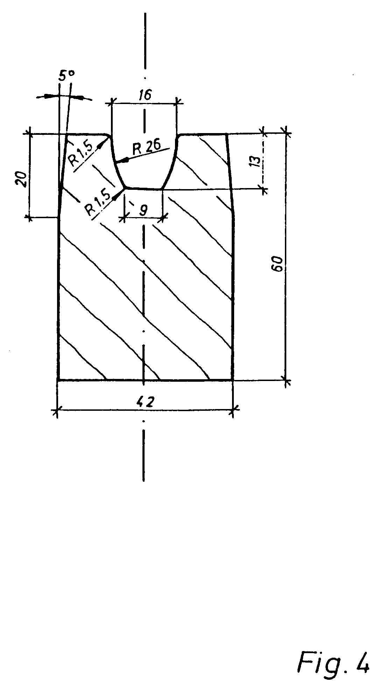

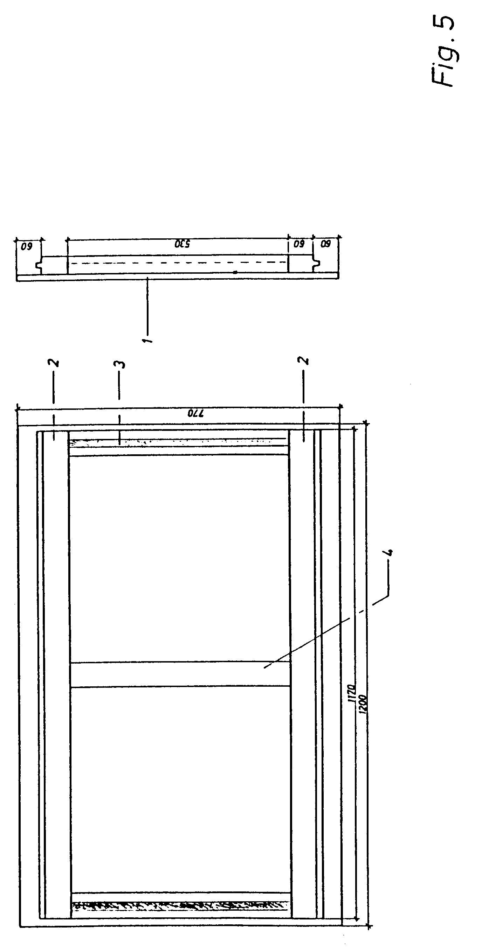

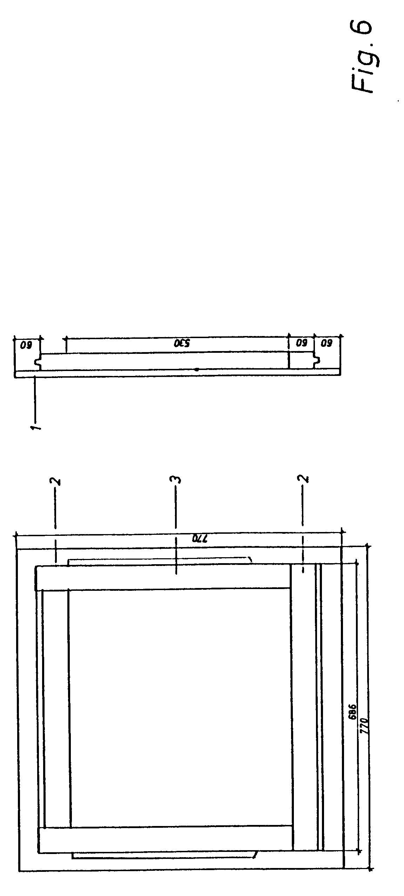

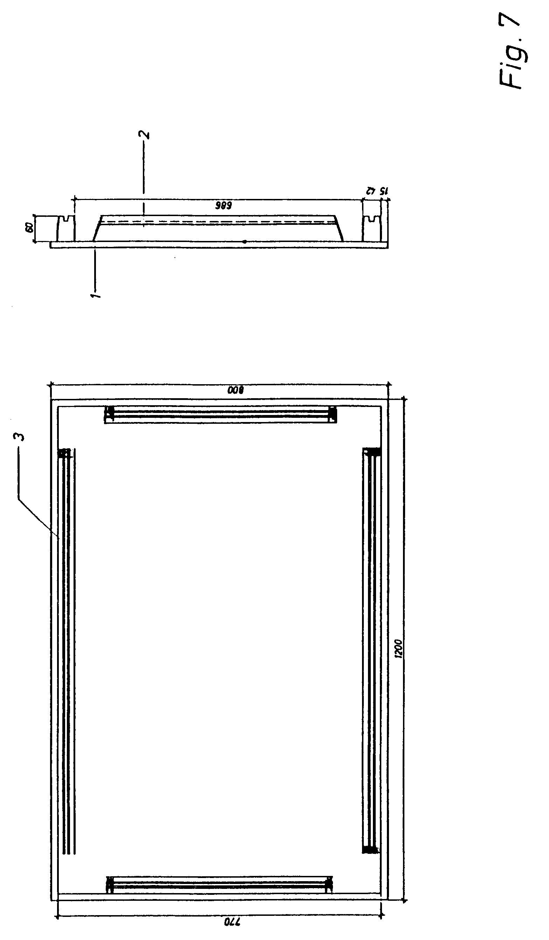

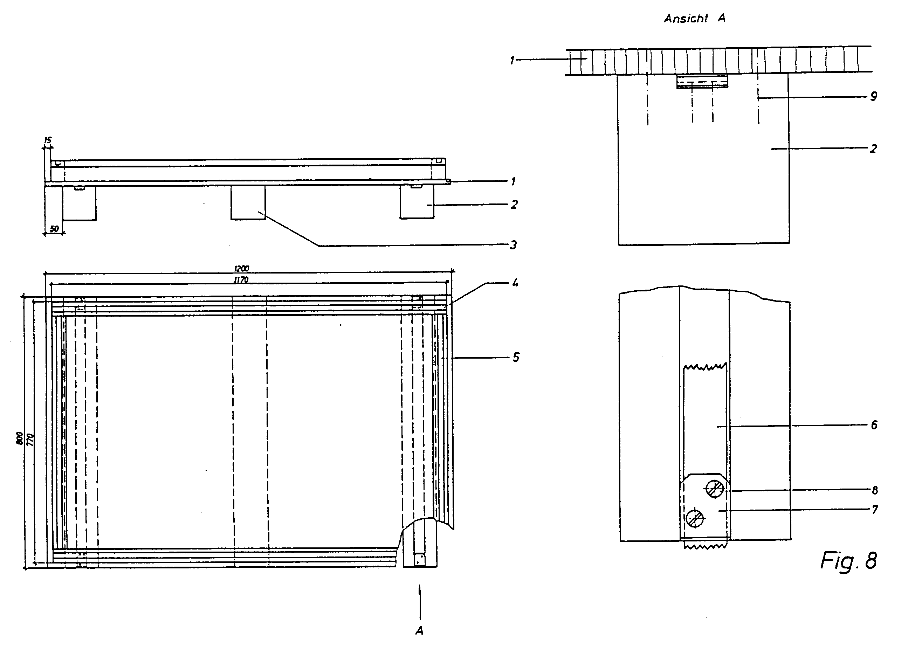

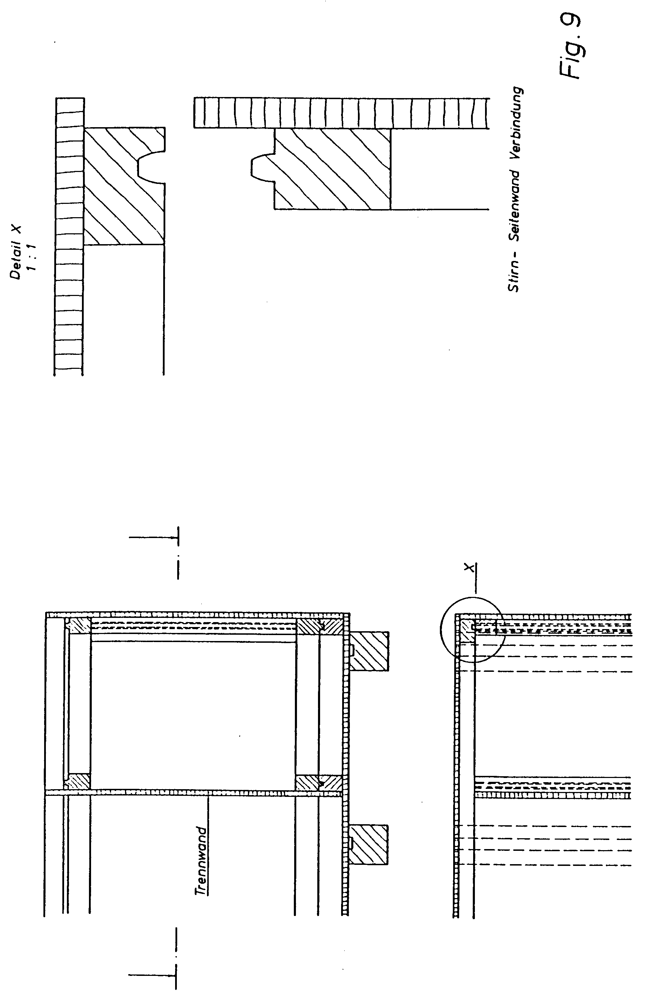

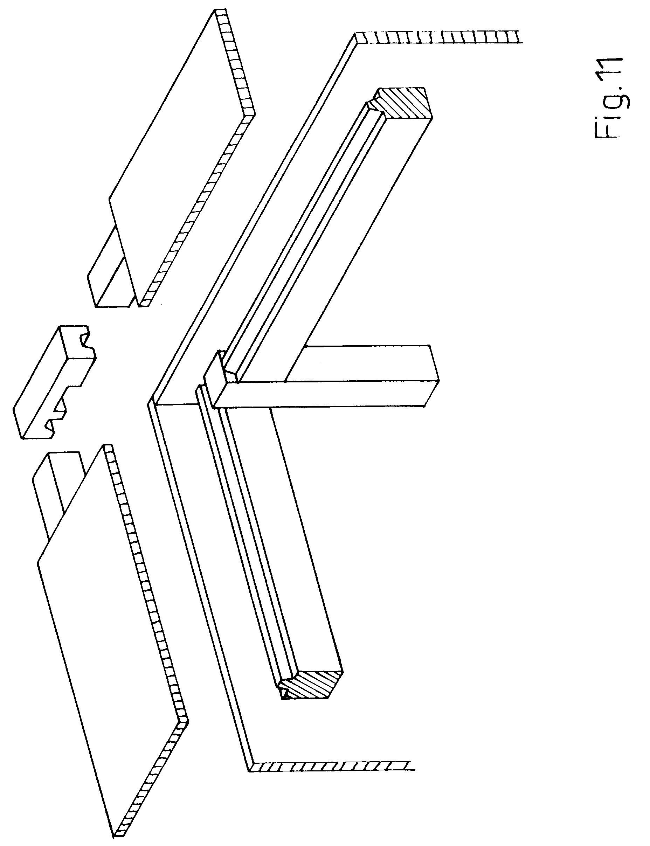

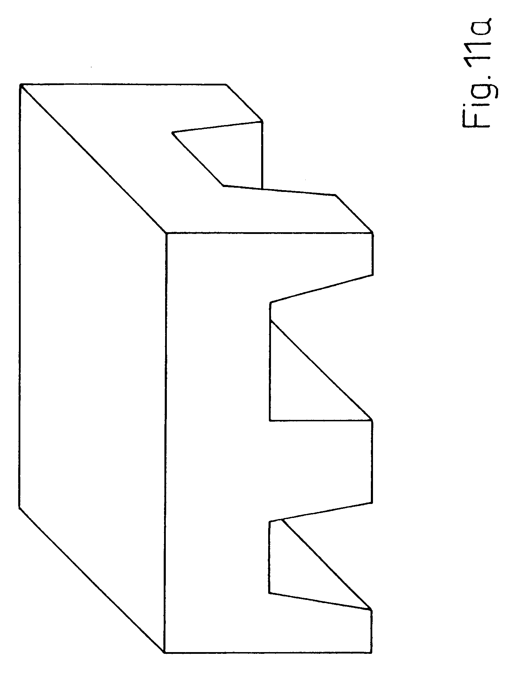

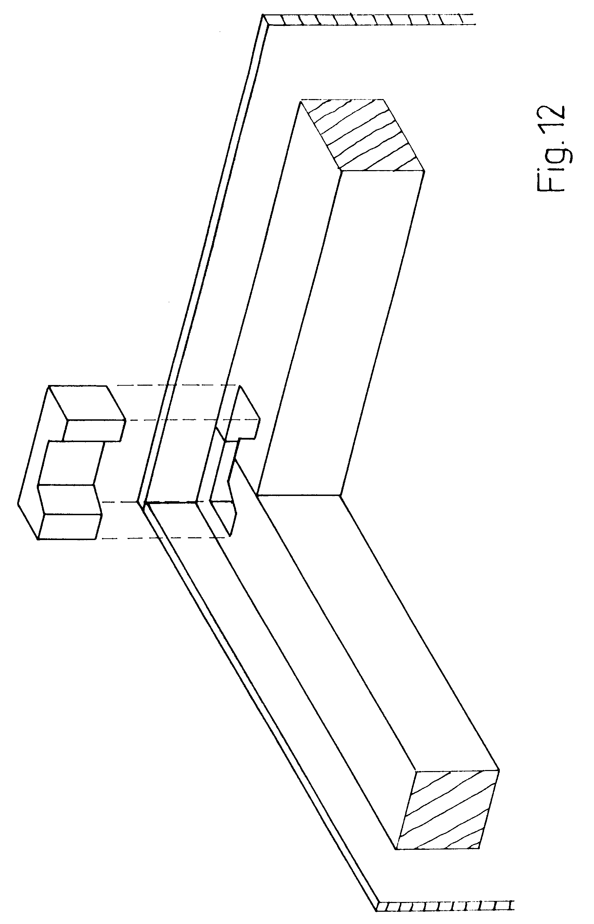

In den Zeichnungen ist ein Ausführungsbeispiel dargestellt.
Dabei zeigen
- Fig. 1: die Gesamtübersicht des Behälters (ohne Details)

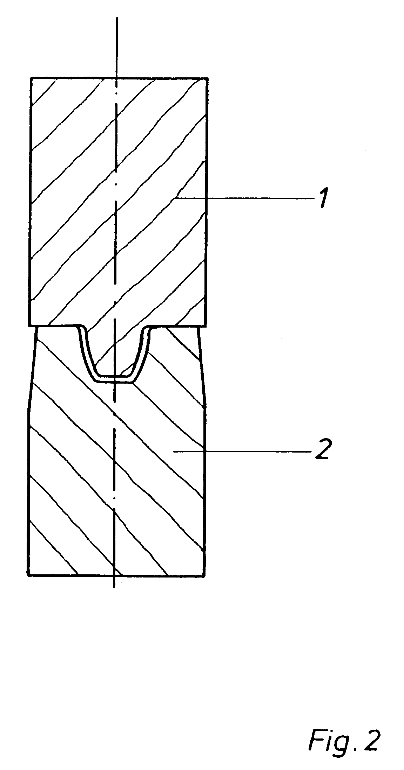

- Fig. 2,3,4: die Form der Profile
- Fig. 5: die Seitenwand

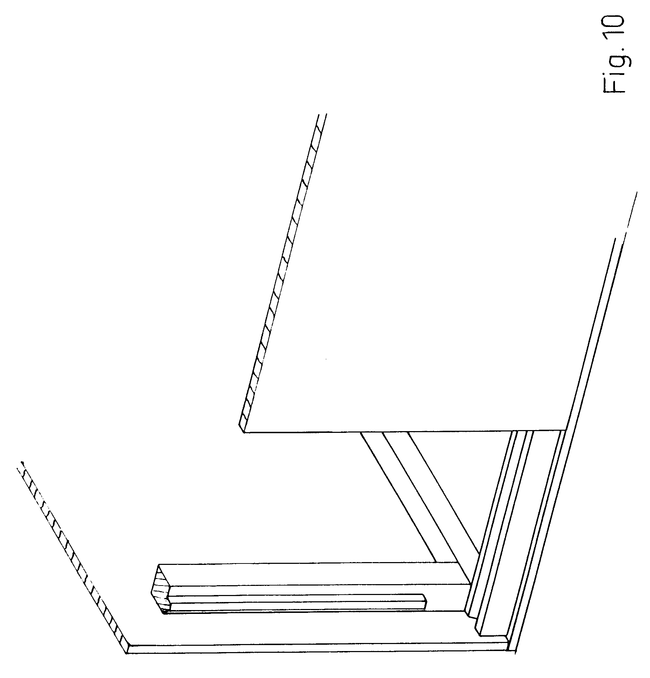

- Fig. 6 und 10: das Kopfstück
- Fig. 7: den Deckel
- Fig. 8: den Boden
- Fig. 9: die Seitenverriegelung
- Fig.11 und 12: die Eckverbindungen

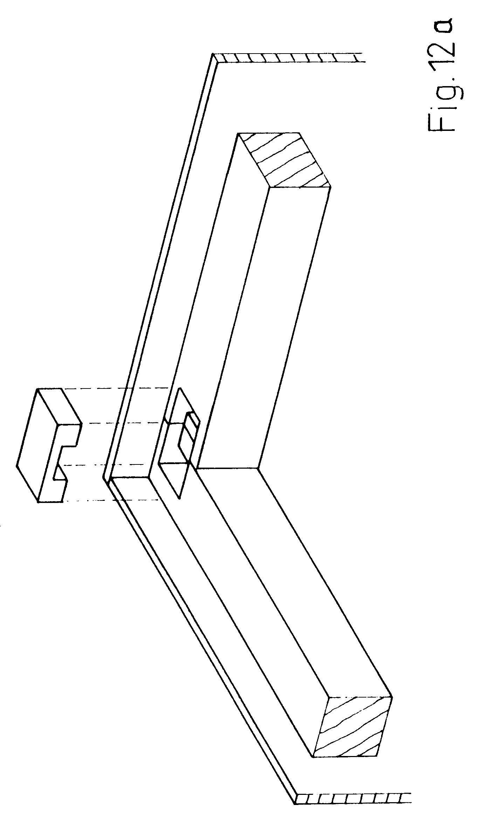

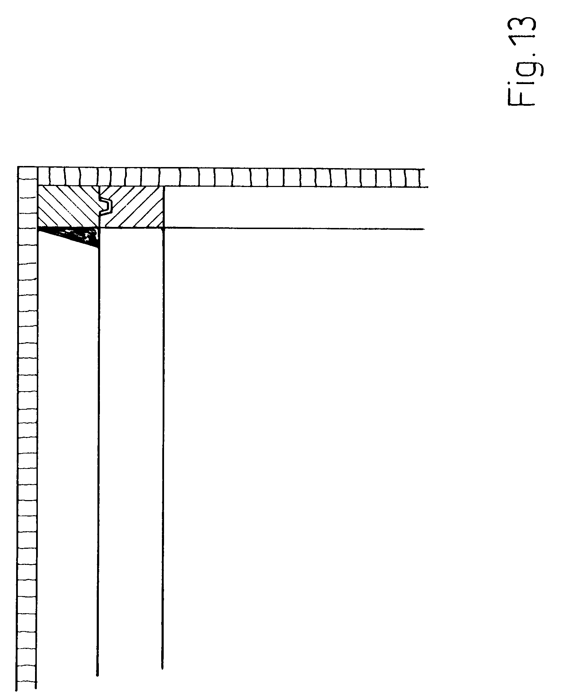

- Fig.13: das Deckelprofil mit Schrägung.
Die Boden und Deckelplatte besteht aus 15mm Sperrholz und einem Rahmenprofil 60x42 mm, das mit der Sperrholzplatte verleimt und verschraubt ist (Fig.7,8,4). Die Seitenteile bestehen aus 15 mm Sperrholz und einem Rahmenprofil 72x42 mm, das mit der Sperrholzplatte verleimt und verschraubt ist (Fig. 5,6,3). Beim Zusammenbau greifen die Federteile der Seiten im die Nutteile des Bodens. Weiter greifen die senkrecht verlaufenden Federn der Riegel der Kopfstücke in gegenüberliegende Nuten an den Riegeln der Seitenwände(Fig.9). Nach dem Zusammenfügen der Seitenteile greifen zusätzliche Eckstücke von oben über (oder in) beide obere Profile der Seitenteile, so daß sich die beiden im rechten Winkel stehenden Wände gegenseitig halten, ohne daß dazu der Deckel aufgesetzt sein muß (Fig.11,12). Die Eckstücke können lose aufgelegt werden, um die beiden Wände in leicht divergenter Position nach oben aufstellen zu können. Dies erleichtert im Zusammenspiel mit dem dargestellten Federprofilquerschnitt und der Abrundung der Außenfläche der Nutriegelseiten das Auflegen des Deckels. Beim Herunterdrücken der Deckelplatte werden gleichzeitig die vier Eckstücke nach unten gedrückt und durch die Anschrägungen in den Eckstücken die Seitenteile aneinandergezogen. Den Zusammenhalt des Behälters gewährleisten umlaufende Spanngurte, die am besten durch Aussparungen in den Standkufen geführt werden.

Der Behälter kann mit einer oder mehreren Innentrennwänden versehen werden, die nach dem Prinzip der Kopfstücke eingesteckt werden, bevor die letzte Seitenwand des Behälters aufgestellt wird.

## Patentansprüche

1. Wiederverwendbarer Behälter, insbesondere für Transport- und Lagerzwecke, zum Schutz von (Industrie-)Gütern, in einzelne Teile zerlegbar und zusammengelegt verschnürbar, aufgebaut durch ein Stecksystem von um die Boden- und Deckelkanten verlaufenden Verzahnungselementen, die in Verbindung mit den Seiten eine stabile Einheit bilden, wobei die Seiten z.B. aus Sperrholz und die Verzahnungselemente aus Nut- und Ferderriegeln bestehen (Fig.2), wobei Boden und Deckel außenseitig mit umlaufendem Nutprofil bestückt sind (Fig.2,7), und die Seitenteile an Ober- bezw. an Unterseite mit Federprofil bestückt sind, und die Federprofile der Seitenteile (Fig.5,6) in die umlaufenden Nutprofile des Bodens bezw. des Deckels greifen (Fig.1,2).
dadurch gekennzeichnet, daß
die Rahmenkonstruktionen der Kopf- und Seitenwände durch eine Nut- und Federverriegelung an den senkrecht verlaufenden Riegelteilen der Rahmenkonstruktionen eine mechanisch verzahnte Einheit bilden, die ein Auseinanderweichen der betroffenen Kopf- und Seitenteile in der Ebene y-z (Fig.9) verhindert.

2. Wiederverwendbarer Behälter nach Anspruch 1,
dadurch gekennzeichnet, daß
in den oberen vier Ecken, die durch die Seiten- und Kopfstücke gebildet werden, je eine Haltevorrichtung steckbar ist, die die Riegel der Seitenwände an die Riegel der Kopfstücke in der Einschubebene y-x der Nutverbindung (Fig.11,12) fixiert.

3. Wiederverwendbarer Behälter nach Anspruch 1+2,
dadurch gekennzeichnet, daß
z.B. die Feder auf dem senkrechten Riegel der Kopfstücke unten um mindestens die Höhe des unteren Riegels der Seitenwand kürzer gehalten ist, um ein Einstecken der Seitenwand in die Leiste des Bodenprofiles zu ermöglichen (Fig.10).

4. Wiederverwendbarer Behälter nach Anspruch 1-3,
dadurch gekennzeichnet, daß
die aufsteckbare Haltevorrichtung z.B. aus einem Holzstück mit rechtwinklig angeordneter Nutfräsung auf der Unterseite und einer quaderförmigen, parallel zu einer der beiden Nuten verlaufenden Aussparung besteht und die Feder der oberen Riegel der Seitenteile, sowie eine in der y-Achse vorstehende Retention des Kopfstückes - z.B. die verlängerte Stirnseite des senkrechten Riegels - übergreift (Fig.11).

5. Wiederverwendbarer Behälter nach Anspruch 1-4,
dadurch gekennzeichnet, daß
die der parallelen Nutfräsung abgewandte senkrechte Seite der quaderförmigen Aussparung der aufsteckbaren Haltevorrichtung nach unten zu unparallel mit ihrer gegenüberliegenden Seite verläuft, so daß bei unvollständigem Anlegen der Haltevorrichtung eine Fixierung der Seitenwand in einem größeren Abstand zum Kopfstück erfolgt und die Haltevorrichtung erst durch den Druck der Deckelplatte in ihre Endposition gebracht wird, wobei das Seitenteil in den Seitschluß mit dem angrenzenden Kopfstück gezogen wird (Fig.11a).

6. Wiederverwendbarer Behälter nach Anspruch 1+2,
dadurch gekennzeichnet, daß
die aufsteckbare Halterung in die angrenzenden Riegelteile von oben (oder von der Seite entsprechend) selbstsichernd, z.B schwalbenschwanzartig (in der Ebene x-z, Fig.12), oder schenkelartig (in der Ebene y-x,Fig.12a), versenkt ist.

7. Wiederverwendbarer Behälter nach Anspruch 1 - 5,
dadurch gekennzeichnet, daß
die Nutprofilriegel des Deckels im Bereich der Ecken z.B. nach unten geschrägte Stirnseiten aufweisen und diese an der Deckelplatte genau so lang sind, daß sie beim Auflegen des Deckels an die Haltestücke schließen und diese bis zum Erreichen der Endposition des Deckels führen (Fig 13).

8. Wiederverwendbarer Behälter nach Anspruch 1-7,
dadurch gekennzeichnet, daß die Flanken der Nut- und Federprofile nach außen gewölbt sind (Fig. 2,3,4).

9. Wiederverwendbarer Behälter nach Anspruch 1-8,
dadurch gekennzeichnet, daß
die Außenflanken der Nutprofilriegel des Deckels zur Nutseite hin konvergent sind (Fig. 2,4).

10. Wiederverwendbarer Behälter nach Anspruch 1+2,
dadurch gekennzeichnet, daß
der Innenraum des Behälters eine Trennwand aufweist, die an ihren Seiten das gleiche Federriegelprofil der Kopfstücke aufweist und an einer ihrer beiden oberen Ecken eine steckbare Haltevorrichtung nach Anspruch 2 besitzt.
